(19) Europäisches Patentamt / European Patent Office / Office européen des brevets

(11) **EP 2 135 145 B1**

## (12) EUROPEAN PATENT SPECIFICATION

(45) Date of publication and mention
of the grant of the patent:
**12.06.2013 Bulletin 2013/24**

(51) Int Cl.:
***G05B 23/02*** (2006.01)

(21) Application number: **08718616.9**

(86) International application number:
**PCT/GB2008/000755**

(22) Date of filing: **05.03.2008**

(87) International publication number:
**WO 2008/119928 (09.10.2008 Gazette 2008/41)**

(54) **ANALYSIS METHOD BASED ON AN ERROR FUNCTION OPTIMIZATION TECHNIQUE**

AUF EINEM FEHLERFUNKTIONS-OPTIMIERUNGSVERFAHREN BASIERENDES
ANALYSEVERFAHREN

PROCÉDÉ D'ANALYSE FONDÉ SUR UNE TECHNIQUE D'OPTIMISATION DE LA FONCTION
D'ERREUR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **03.04.2007 GB 0706554**

(43) Date of publication of application:
**23.12.2009 Bulletin 2009/52**

(73) Proprietor: **Rolls-Royce plc
London SW1E 6AT (GB)**

(72) Inventor: **BROWN, Stephen, Geoffrey
Derby DE21 5LF (GB)**

(74) Representative: **Roberts, Nicholas John et al
Rolls-Royce plc
Intellectual Property
SinB-38, P.O. Box 31
Derby, Derbyshire DE24 8BJ (GB)**

(56) References cited:
**WO-A-2006/008554       WO-A-2006/123090
US-A1- 2005 267 718**

**EP 2 135 145 B1**

**Description**

The present invention relates to methods of analysing test and/or service data from engines.

Analysis of the performance of engines is important for both testing of development engines and condition monitoring of operating engines. In particular, the ability to identify accurately and reliably the component or components responsible for a loss of performance is beneficial. However, the nature of complicated systems, such as gas turbine engines, means there are inherent problems to be addressed if this is to be achieved in practice.

In common with other power plant, a gas turbine's performance can be expressed in terms of a series of system variables (sometimes known as performance parameters) for the various components of the gas turbine. Typically, those chosen to characterise the performance of a gas turbine would be the efficiency and flow function of compressors and turbines and the discharge coefficient of nozzles. Significantly, these system variables are not directly measurable. They are, however, related to measurable engine parameters, such as spool speeds, averaged pressures and temperatures, thrust and air flows, and any loss in performance of a component will be reflected by changes in these measurable parameters.

Given a particular operating point, typically defined by environmental conditions and a power setting (inlet temperature and pressure, and fuel flow for example, or other such operating parameters), the relationship between measured engine parameters and system variables can be represented, for example, in a performance simulation model describing the aerothermodynamics of the gas turbine's components. In principle, this enables the system variables and, more importantly, changes in them from respective reference values, to be calculated. In turn, it should be possible, from these calculated values, to detect a drop in the performance of one or more components and hence deduce the cause of a loss in performance. This can be achieved using thermodynamic or synthesis models or by use of exchange rate models. Exchange rate models provide a linear relationship between system variables and measurable engine parameters which is valid for small variations around the chosen operating point.

A number of methods exist for the understanding of engine test data produced from steady state engine analysis. The most basic of these uses measured engine parameters to calculate component thermodynamic efficiencies (actual gas temperature ratio across the component, relative to the ideal temperature ratio for the given pressure ratio). This provides component data at the conditions under which the test is run, but does not provide data which can be scaled or synthesised to other conditions. Additional parameters such as air flows and pressures and temperatures not measured directly (e.g. turbine entry temperature (TET): the gas temperature at the entry to the first (high pressure) turbine rotor blade, which is too hot to measure directly) may be calculated using further assumptions.

More rigorous analysis is possible using a tool known as ANSYN ("Analysis/Synthesis") produced by Rolls-Royce. This uses a thermodynamic or synthesis model of the engine and thereby derives the scaling of characteristics etc. to match the measured data. This tool uses an iterative solution matching process whereby the user selects a number of system variables (e.g. efficiencies, flow capacities) that will be changed so as to match the measured data. An exact solution can therefore be obtained which can then be used to tune the model.

However, in the ANSYN tool, the number of variables must be equal to the number of measurements, as otherwise an exact solution cannot be obtained. Furthermore, this method can only provide a solution for those variables which are selected by the user and cannot analyse errors arising due to instrument inaccuracy or due to engine faults or divergences not covered by the selected variables (e.g. air system leakages).

Another tool available and used in engine trend monitoring is the module performance analysis (MPA) tool which forms part of "COMPASS"/VQ48 software produced by Rolls-Royce and is discussed in GB 2,211,965. This uses a Kalman filter with a least-squares optimisation scheme. The analysis is carried out using exchange rates rather than a synthesis model. The use of exchange rates can greatly simplify the analysis of engine data since the complicated thermodynamic relationships of a synthesis model are replaced by linear relationships between all of the parameters. Although exchange rate models are generally only applicable in situations where the values of the parameters change by small percentages (e.g. 3-4%), this is usually sufficient for this type of analysis.

This process permits measurement errors and component differences to be assessed. The assumption is made that measurement errors and component differences can be considered as statistical; that is, they are known with a particular uncertainty. More specifically, an optimisation can be carried out on the following error function:

$$\sum_{i=1}^{n}\left|Var(i)\Big/VNorm(i)\right|^2 + \sum_{j=1}^{m}\left|\left(Mcal(j)-M(j)\right)\Big/MNorm(j)\right|^2$$

where n is the number of system variables, Var(i) is the value of a variation of the $i^{th}$ system variable, VNorm(i) is a normalisation value of the $i^{th}$ system variable, m being the number of measured parameters, M(j) being the measured value of the $j^{th}$ parameter, Mcal(j) being an expected value for the $j^{th}$ parameter, and MNorm(j) being a normalisation

2

value of the $j^{th}$ parameter. Mcal(j) is calculated from a plurality of exchange rates and the variations of the system variables according to the expression:

$$Mcal(j) = \sum_{i=1}^{n} Var(i) \times Xrate(i, j)$$

where Xrate(i,j) is the exchange rate in the $j^{th}$ parameter with respect to variation of the $i^{th}$ system variable.

The solution that minimises the amount of the error implied in the measurements and system variables is obtained. Further filtering may then be carried out which sets those errors that are smallest to be equal to zero and so concentrate the errors on fewer measurements and/or components.

However, the use of the least squares optimisation results in the changes being shared across a large number of variables, resulting in both a reduction in the apparent magnitude of the correct parameters and "smearing" into parameters that should not have been affected.

Additionally, the least squares approach is not statistically valid in the case where a fault exists (and under such circumstances this process will often fail completely). This is due to the statistical assumption that there is a normal distribution centred about the expected value. An error (such as that caused by a broken pipe or wire) will form a different statistic to that assumed to be due to random scatter (i.e. measurement accuracy).

WO 2006/123090 discloses a "search" method for analysing measured parameters in which an error function is optimised, and then combinations of a predetermined number of a subset of the system variables are adjusted to determine the combination which makes the greatest contribution to the optimised error function. By selecting a subset of the system variables prior to analysing the possible combinations, the number of possible combinations which are analysed in the above method can be significantly reduced.

WO 2006/123090 also discloses the use of an error function which is a sum of absolute variations, and a least-absolutes optimisation of that function. This approach allows the number of system variables in the solution which contribute to the error to be restricted to the number of measurements taken. Thus a solution can be obtained that minimises the error by concentrating on a limited subset of possible measurement or component differences. The approach can provide an effective form of "concentrator" which permits the analysis of the combined effects of, for example, component deterioration, component faults and measurement faults.

In general terms, an aspect of the present invention is based on the realisation that it is possible to group system variables together in such a way that the grouped variables correspond to known mechanisms changing the performance of the system.

Thus a first aspect of the invention provides a method of analysing the performance of a system of an engine, expressed in terms of a plurality of system variables which are associated with expected parameter values for the system, the method including: obtaining values of a measured parameter for the system in test and/or in service; analysing the measured parameter values in relation to corresponding expected parameter values by optimising an error function which relates said measured parameter values to the system variables; wherein the step of optimising the error function includes adjusting the system variables to vary the expected parameter values and thereby vary the amount of error represented by the error function; characterised in that the system variables are grouped such that: a first portion of the system variables are adjusted independently of each other, and a further portion of the system variables are adjusted dependently of each other, such that in the further portion the system variables remain in a predetermined constant ratio relative to each other, the predetermined constant ratio being characteristic of a known mechanism changing the performance of the system.

Thus the analysis method effectively takes account of prior knowledge about how the system performance can be modified, which in turn facilitates the identification of performance-changing mechanisms.

The known mechanism typically degrades the performance of the system. For example, when the system is a gas turbine, build up of dirt in a compressor, internal leaks (e.g. resulting in efficiency losses due to spoiling), general degradation and faults in the high pressure compressor, can all degrade performance. In particular, turbine vane damage can produce turbine capacity and/or efficiency changes, and compressor damage can produce capacity and/or efficiency changes, and also increases in vibration.

However, the mechanism may be one that improves the performance of the system. For example, and again when the system is a gas turbine, washing the compressors can lead to performance gains, general maintenance action, and correction of faults can improve performance. Typical fault corrections include correcting the rigging of variable vane systems, and replacing leaking bleed valves or other seals. Additional further portions of the system variables may be adjusted dependently of each other, each additional further portion corresponding to a respective known mechanism changing the performance of the system.

The system may be a gas turbine or part thereof. System variables for such a system may include one or more of compressor efficiency, compressor flow capacity, compressor nozzle capacity, turbine efficiency, turbine flow capacity, turbine nozzle capacity, combustor pressure loss, combustor efficiency, air leak, rotational speed factor, cooling effectiveness, and instrumentation error.

Thus a grouping of system variables for dependent adjustment in relation to compressor dirt build up could be efficiency and flow capacity of the respective compressor stage. A grouping of system variables for dependent adjustment in relation to faults in the high pressure compressor could be efficiency and flow capacity of the high pressure compressor. A grouping of system variables for dependent adjustment in relation to internal leaks of cooling air around, for example a turbine stage, could be (i) air leak and efficiency of the stage, (ii) air leak and flow capacity of the stage, or (iii) air leak, efficiency and flow capacity of the stage. A grouping of system variables for dependent adjustment in relation to performance degradation caused by damaged tip clearance in a cascade of blades could be efficiency of that cascade, efficiency of the following cascade and flow capacity of the following cascade.

However, the system could be, for example, an internal combustion engine, such as a diesel engine, in which case different system variables would be appropriate.

Preferably, the error function is a sum of absolute variations and the step of optimising includes a least-absolutes optimisation, the error function including the term:

$$\sum_{i=1}^{n} \left| \frac{Var(i)}{VNorm(i)} \right|$$

n being the number of system variables, Var(i) being the value of a variation of the $i^{th}$ system variable, VNorm(i) being a normalisation value of the $i^{th}$ system variable; and

the value of each VNorm(i) is in inverse relation to the amount of variation in the expected parameter values produced by adjusting the respective system variable.

The least absolutes approach advantageously reduces "smearing". However, we have found that the analysis is then sensitive to the value of VNorm(i). Nonetheless, by using a VNorm(i) which is inversely related to the amount of variation in the expected parameter values, acceptable solutions can be obtained in some or most cases. Further, the values for such a VNorm(i) advantageously do not need to be input into the analysis as they can be calculated automatically. Thus they require no expert knowledge on the part of the operator.

Preferably, the error function is of the form:

$$\sum_{i=1}^{n} \left| \frac{Var(i)}{VNorm(i)} \right| + \sum_{j=1}^{m} \left| \frac{(Mcal(j) - M(j))}{MNorm(j)} \right|$$

m being the number of measured parameters, M(j) being the measured value of the $j^{th}$ parameter, Mcal(j) being an expected value for the $j^{th}$ parameter, and MNorm(j) being a normalisation value of the $j^{th}$ parameter.

Mcal(j) can be calculated from a plurality of exchange rates and the variations of the system variables according to the expression:

$$Mcal(j) = \sum_{i=1}^{n} Var(i) \times Xrate(i, j)$$

where Xrate(i,j) is the exchange rate in the $j^{th}$ parameter with respect to variation of the $i^{th}$ system variable.

Alternatively, Mcal(j) may be calculated directly, for example, from a non-linear model, such as a synthesis model.

Further, the method may include the step of determining values of each VNorm(i) using the expression:

$$VNorm(i) \propto \left( \sqrt{\sum_{j=1}^{m} (Xrate(i, j))^2} \right)^{-1}.$$

Alternatively, the method may include the step of determining values of each VNorm(i) using the expression:

$$VNorm(i) \propto \left( \sqrt{\sum_{j=1}^{m} \left( Xrate(i, j) / Mnorm(j) \right)^2} \right)^{-1}.$$

The VNorm(i) values may be scaled such that the average VNorm(i) value equals 1. Alternatively, an operator can scale the values to a level of choice.

In the case where Mcal(j) is calculated directly from a model, the model can be locally linearised to provide the exchange rates.

The step of optimising in either of the above aspects can be performed, for example, by using a Kalman filter to represent the error function and then applying an optimisation scheme, such as a Simplex routine, to find the optimal value for the function. Alternatively, the step of optimising can be performed using the "search" method of WO 2006/123090.

A result of the analysis method may be displayed, stored or conveyed for subsequent use.

The method may further include the step of measuring theengine, or an output from the engine, to obtain the measured parameter values.

A further aspect of invention provides a method of operating a system including:

performing the analysis method according to the first aspect, and

repairing the system or performing maintenance on the engine in response to a result of the analysis method.

Further aspects of the invention provide: computer-readable code for performing the method of the first aspect; a computer program product carrying such computer-readable code; and a computer system configured to perform the method of the first aspect.

A typical computer system of the present invention includes a central processing unit (CPU), input means, output means and data storage means (such as RAM). A monitor may be provided for display purposes.

The term "computer program product" includes any computer readable medium or media which can be read and accessed directly by a computer. Typical media include, but are not limited to: magnetic storage media such as floppy discs, hard disc storage medium and magnetic tape; optical storage media such as optical discs or CD-ROM; electrical storage media such as RAM and ROM; and hybrids of these categories such as magnetic/optical storage media.

For example, a computer system according to the invention may include a processor adapted to optimise an error function and to select subsets of variables depending on their contribution to the optimised error function.

The computer system may further comprise a memory device for storing measurement data which is used in forming the error function. Solution(s) to the optimisation(s) may be stored on another or the same memory device, and/or may be sent to an output device or displayed on a monitor.

Embodiments of the invention will now be described by way of example with reference to the accompanying drawings in which:

Figure 1 shows a simplified model of a compressor;

Figure 2 represents (a) a simple system with three system variables a, b and c and two measured parameters x and y, and (b) the same system after adjustment of the normalisation values associated with a, b and c; and

Figure 3 is a plot of calculated values of flow capacity and efficiency against the flow capacity and efficiency ratio in a composite variable.

*Model*

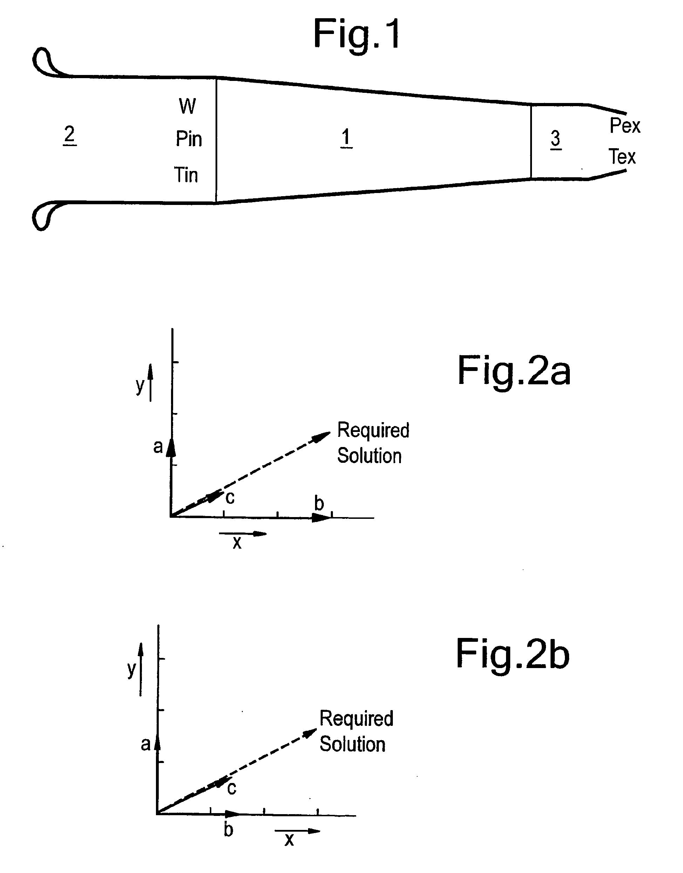

In order to evaluate the present invention and make comparisons with known analysis tools, a simplified model of a compressor was used. Figure 1 shows the model schematically. As well as compressor 1, the model has an intake 2 and a nozzle 3.

The model assumes that the following parameters are measured:

W intake airflow (lb/s)

Pin compressor entry pressure (lb/sq.in)

Tin compressor entry temperature (K)

Pex compressor delivery pressure (lb/sq.in)

Tex compressor delivery temperature (K)

N compressor speed

The model further assumes that the compressor is run to the measured speed. The compressor has a reference operating condition of a nominal pressure ratio of 12:1, a nominal intake airflow of 100 lb/s (45 kg/s), and a nominal efficiency of 0.88. These parameters are used to derive a simple model for the compressor with a fixed effective final nozzle area (in this case a fixed flow function). The flow at the nozzle can then be modelled for the reference operating condition.

The system variables for the model are:

Eta compressor efficiency

Wc flow capacity

Aex effective final nozzle area (taken as W√Tex/Pex)

The model can be run with a measured inlet temperature (Tin), measured inlet pressure (Pin), and measured compressor speed (N). The requirement is to match Aex to its fixed value by changing the pressure ratio. Thus Aex is iteratively calculated for given pressure ratios, compressor efficiencies, flows, inlet temperatures, and inlet pressures. When Aex is matched, the model provides an expected intake airflow (W), delivery pressure (Pex) and delivery temperature (Tex). These three expected parameters, when compared with corresponding measured parameters, provide a measure of the deviation of the compressor from its expected characteristic.

Having set up the model, the system variables Eta, Wc and Aex were each perturbed (by 1% changes) to alter the model's characteristics and to derive respective exchange rates for □W, □Pex and □Tex, where:

```
□W    =    (expected    W    -    reference    W)/reference    W
□Pex =    (expected    Pex    -    reference    Pex)/reference    Pex
□Tex = (expected Tex - reference Tex)/reference Tex
```

In addition, further system variables were defined and perturbed (again by 1%) to model the effect of errors in the measurements of Pin, Tin, W, Pex, Tex and N. As long as the analyses explore operating conditions close to the reference operating condition, the values for expected parameters derived by using the exchange rates will be close to the corresponding values that would have been derived by running the model. However, an advantage of using exchange rates is that inconvenient and time-consuming iterative calculations can be avoided.

Table 1 shows the exchange rates obtained for the perturbations.

Table 1

|  | □W | □Pex | □Tex |
|---|---|---|---|
| 1% Wc | 0.0089 | 0.0105 | 0.0032 |
| 1% Eta | 0.0003 | -0.0032 | -0.0070 |
| 1% Aex | 0.0011 | -0.0103 | -0.0031 |
| 1% Pin error | -0.0099 | -0.0099 | 0.0000 |
| 1% Tin error | 0.0050 | 0.0000 | -0.0099 |
| 1% N error | -0.0175 | -0.0206 | -0.0063 |
| 1% W error | 0.01 | 0 | 0 |
| 1% Pex error | 0 | 0.01 | 0 |
| 1% Tex error | 0 | 0 | 0.01 |

The first six system variables in Table 1 are those driving the model. The last three system variables are measurement errors which only influence their respective parameters. In particular, the measurement of mass flow (W) is independent of the entry pressure and temperature. While this may not be entirely physically reasonable, it is acceptable for the present purpose, which is to illustrate the operation of analysis tools, rather than to develop an actual compressor model.

Examination of the exchange rates in Table 1 shows that the 1% Wc and 1% N error system variables are correlated, i.e. they both result in the same measurement effect (1% N error produces exchange rates which are -2x those of 1% Wc). Thus the inclusion of both in the analyses which follow does not add value since they are effectively indistinguishable. The correlation occurs because the compressor efficiency does not change with operating point. In fact, a close correlation between Wc and N commonly occurs in more sophisticated models as well.

*Signatures*

Three measurement signatures, also in terms of $\Box$W, $\Box$Pex and $\Box$Tex, were used for evaluating the capabilities of different analysis techniques. In a measurement signature, $\Box$W = (measured W - reference W)/reference W, $\Box$Pex = (measured Pex - reference Pex)/reference Pex, and $\Box$Tex = (measured Tex - reference Tex)/reference Tex).

The first signature corresponds to a deteriorated compressor, where both capacity and efficiency are reduced below the model values. Values of -1.8% efficiency and - 1.8% capacity were used. As shown in Table 2, a suitable measurement signature was obtained by adding the appropriate exchange rates from Table 1 above and then including some noise.

Table 2

|  | $\Box$W | $\Box$Pex | $\Box$Tex |
|---|---|---|---|
| -1.8% Wc | -0.01595 | -0.01882 | -0.00569 |
| -1.8% Eta | -0.00063 | 0.005711 | 0.012642 |
| Total | -0.01658 | -0.01311 | 0.006949 |
| Noise | -0.0012 | 0.0008 | 0.0011 |
| Signature | -0.01778 | -0.01231 | 0.008049 |

The second signature is for a single change, i.e. a measurement error, or a change in one of the three input parameters (Pin, Tin and N). An example would be a -2.0% error in Pex, which, after adding noise, gives the signature shown in Table 3.

Table 3

|  | $\Box$W | $\Box$Pex | $\Box$Tex |
|---|---|---|---|
| -2% Pex error | 0 | -0.02 | 0 |
| Noise | -0.0008 | 0 | -0.0011 |
| Signature | -0.0008 | -0.02 | -0.0011 |

As shown in Table 4, the third signature is the sum of the first and second signatures, except that only one level of noise is applied. The signature represents a poor quality compressor and a measurement error on Pex:

Table 4

|  | $\Box$W | $\Box$Pex | $\Box$Tex |
|---|---|---|---|
| -1.8% Wc and -1.8% Eta | -0.01658 | -0.01311 | 0.006949 |
| -2% Pex error | 0 | -0.02 | 0 |
| Total | -0.01658 | -0.03311 | 0.006949 |
| Noise | -0.0012 | 0.0008 | 0.0011 |
| Signature | -0.01778 | -0.03231 | 0.008049 |

*Analysis Techniques*

The exchange rates and measurement signatures were used to assess analysis techniques based on known approaches as well as analysis techniques according to the present invention.

The analysis techniques were:

Comparative Example 1 (ANSYN)

Comparative Example 2 (COMPASS)

Comparative Example 3 ("Search" method)

Example 1 (COMPASS + least-absolutes/normalisation)

Example 2 ("Search" method + composite variables)

Example 3 (COMPASS + least-absolutes/normalisation +

composite variables)

These techniques are described in more detail below.

- Comparative Example 1 (ANSYN)

This analysis technique assumes that all measurements are correct. Using the measurements, it calculates system variables from a model of the system. Typically ANSYN would use a full non-linear model of the system (a synthesis model), but for present purposes a linearised version was used (i.e. the exchange rates). The calculated system variables were Eta, Wc and Aex.

- Comparative Example 2 (COMPASS)

This uses a Kalman filter (COMPASS) to embody the error function and a Simplex routine to optimise that function. It allows potential measurement errors to be included in the assessment. More specifically, an optimisation was carried out on the following error function:

$$\sum_{i=1}^{n}\left|Var(i)\Big/VNorm(i)\right|^{2} + \sum_{j=1}^{m}\left|(Mcal(j)-M(j))\Big/MNorm(j)\right|^{2}$$

where $Mcal(j) = \sum_{i=1}^{n} Var(i) \times Xrate(i,j)$. Thus the Var (i) variations were 1% Wc, 1% Eta, 1% Aex, 1% Pin error, 1% Tin error, 1% N error, 1% W error, 1% Pex error, 1% Tex error; the Mcal(j) expected values were □W, □Pex, and □Tex as derived from the exchange rates of Table 1; and the M(j) measured values were □W, □Pex, □Tex from the measurement signature of Table 2, 3 or 4.

- Comparative Example 3 ("Search" method)

This was based on a simplification of the approach disclosed in WO 2006/123090. Each system variable is considered in turn, its value being adjusted to optimise the error function:

$$\sum_{j=1}^{m}\left|(Mcal(j)-M(j))\Big/MNorm(j)\right|^{2}$$

while the other system variables are unaltered.

The error function is just the second term of error function used in the COMPASS approach.

More complex analyses can also be carried out by adjusting the values of each possible combination of two system variables, or each combination of three system variables etc., while leaving the system variables outside the combination unaltered. Within a combination, each system variable is adjusted independently of the other variables in the combination.

The solution is then just the variable or combination of variables that minimises the error function.

- Example 1 (COMPASS + least-absolutes/normalisation)

This was based on the approach of Comparative Example 2, but with two significant modifications.

The first modification is to use the following error function:

$$\sum_{i=1}^{n}\left|\frac{Var(i)}{VNorm(i)}\right| + \sum_{j=1}^{m}\left|\frac{(Mcal(j)-M(j))}{MNorm(j)}\right|.$$

Thus the function is a sum of absolute variations, with the optimisation being a least-absolutes optimisation.

Performing a least-absolutes optimisation rather than a least-squares optimisation tends to reduce "smearing" by concentrating the solution on fewer system variables. Also a linear model (e.g. based on exchange rates) can be solved very quickly using adapted simplex methods. In fact, for a linear system, the number of variables in the solution will typically be the same as the number of measured parameters whose values are to be modelled.

It was found, however, that solutions obtained by the least-absolutes optimisation were very sensitive to the choice of normalisation values, VNorm(i).

Thus, according to the second modification, the value of each VNorm(i) in the error function is made inversely proportional to the amount of variation in the expected parameter values produced by adjusting the respective system variable. The significance of this modification can be illustrated by considering each Var(i)/VNorm(i) term as a vector in m-space, where the dimensions of m-space correspond to the measured parameters.

For example, we can consider a simple system with three system variables a, b and c and two measured parameters x and y, where a 1% change in a produces a 1.5% change in y, a 1% change in b produces a 3% change in x, and a 1% change in c produces a 0.5% change in x and a 1% change in y. As shown in Figure 2a, the three vectors corresponding to a, b and c can be represented in 2D x-y space.

Also shown in Figure 2a, with a dashed line, is a vector corresponding to a required solution. If, the VNorm(i) normalisation values for a, b and c are the same and equal to unity, then the required solution could be obtained by approximately one part of a and one part of b at a cost to the error function of about two. Alternatively, the required solution could be obtained by approximately three parts of c at a cost to the error function of about three. However, in general, the actual solution is more likely to have been caused by the system variable that produces changes which are best aligned with measurements (as vector c is best aligned with the required solution in Figure 2a). It is therefore clear that the "wrong" solution (i.e. approx. 1% a + 1% b) has been preferred over the "right" solution (approx. 3% c).

With the modification to VNorm(i), this difficulty can be overcome. Specifically, the modification forces the cost to the error function of matching the measured and expected parameters to be equalised for the different system variables. As shown in Figure 2b, with the modification, the three vectors corresponding to a, b and c become equal in length. The required solution is then obtained by approximately one part of a and two parts of b at a cost to the error function of about three, or by approximately two parts of c at a cost to the error function of about two, which favours the "right" solution.

The actual values for each VNorm(i) were determined by: (1) calculating the square root of the sum of the squares of the exchange rates for the respective system variable, (2) taking the inverse of that number, and (3) scaling all the inverses so that their average equals to one.

A further advantage of this modification is that it does not require the person performing the analysis to have any knowledge of appropriate settings for the VNorm(i) values. Indeed, the values can be calculated automatically by the analysis software.

- Example 2 ("Search" method + composite variables)

As with the approach of Comparative Example 3, each variable or combination of variables is considered in turn, its value being adjusted to optimise an error function which again is:

$$\sum_{j=1}^{m}\left|\frac{(Mcal(j)-M(j))}{MNorm(j)}\right|^{2}.$$

A modification, however, is to include "composite" system variables. That is, the error function is also optimised for at least one subgroup of the system variables under the restriction that adjustments to the variables of the subgroup are always in a predetermined constant ratio relative to each other. Thus the system variables of a subgroup are dependent and effectively form a "composite" variable.

Advantageously, the predetermined constant ratio can be characteristic of a known mechanism changing the performance of the system, such as deterioration caused by dirt accumulation. The composite variable should, then, be a favoured solution when the measurement signature is characteristic of such deterioration.

- Example 3 (COMPASS + least-absolutes normalisation + composite variables)

This approach is identical to Example 1, except that composite variables were also included in the analysis.

*Results*

- Comparative Example 1 (ANSYN)

For each signature there are three measurements resulting from the model, i.e. $\square$W, $\square$Pex and $\square$Tex from Tables 2 to 4. Aligned with these we have three system variables, i.e. Eta, Wc and Aex. This equality of count always allows an exact solution to the problem to be identified for each signature.

Application to the first signature (deteriorated compressor) produced the following result:

Table 5

|  | Signature value | Calculated value |
|---|---|---|
| $\square$ Wc | -1.8 | -1.91 |
| $\square$ Eta | -1.8 | -1.94 |
| $\square$ Aex | 0 | -0.15 |

Thus the calculated values for the system variables correspond well with the values used to create the signature, the differences being the result of the noise included in the signature.

The second signature is for a measurement error, and the analysis produces the following result:

Table 6

|  | Signature value | Calculated value |
|---|---|---|
| $\square$ Wc | 0 | 0.14 |
| $\square$ Eta | 0 | -0.82 |
| $\square$ Aex | 0 | 2.05 |

ANSYN clearly cannot produce the required result even with this relatively simple case. The cause of the signature is not identifiable.

The third signature is for the deteriorated compressor plus the measurement fault. This gives the following result:

Table 7

|  | Signature value | Calculated value |
|---|---|---|
| $\square$ Wc | -1.8 | -2.13 |
| $\square$ Eta | -1.8 | -2.95 |
| $\square$ Aex | 0 | 1.87 |

There is again significant error, and diagnosing the causes of the signature is difficult.

Summary:- ANSYN is a reliable tool provided that the measurements are reliable, i.e. any errors in the instrumentation are small compared with the engine changes being analysed. When instrumentation errors are present, this typically results in a misplaced analysis, and does not provide an easy evaluation of the discrepancy.

- Comparative Example 2 (COMPASS)

Analysing the first signature (deteriorated compressor), initially the values for VNorm(i) were set to 1% for all the system variables, and the values for MNorm(j) were set 0.1% for all the measured parameters. However, the analysis was repeated with the value of VNorm(i) for the Pin error, Tin error, W error, Pex error and Tex error set to 0.5% instead of 1%. This tended to increase the cost associated with these system variables and therefore focussed the solution on the Wc, Eta and Aex system variables. The analysis was then repeated again with with the value of VNorm(i) for the Pin error, Tin error, W error, Pex error and Tex error set to 0.25%, focussing the solution even further on Wc, Eta and Aex.

The results of the three analyses are given in Table 8.

Table 8

| | Signature Value | Calculated Value for different VNorm(i) | | |
|---|---|---|---|---|
| | | 1 | 0.5 | 0.25 |
| □ Wc | -1.8 | -0.48 | -1.02 | -1.54 |
| □ Eta | -1.8 | -0.18 | -0.64 | -1.30 |
| □ Aex | 0 | -0.01 | -0.08 | -0.15 |
| □ Pin error | 0 | 0.62 | -0.36 | 0.15 |
| □ Tin error | 0 | -0.53 | -0.39 | -0.18 |
| □ W error | 0 | -0.47 | -0.28 | -0.10 |
| □ Pex error | 0 | -0.16 | -0.09 | -0.04 |
| □ Tex error | 0 | 0.30 | 0.26 | -1.54 |

The first analysis was very poor in that it distributed the solution across all the available variable and also significantly reduced values of the variables relative to the required values. This is the "smearing" that is typical of this style of analysis. The second analysis was an improvement, with □ Wc and □ Eta having the highest calculated values. The third analysis provided further improvement.

The same three settings were then used to analyse the second signature. The results are summarised in Table 9:

Table 9

| | Signature Value | Calculated Value for different VNorm(i) | | |
|---|---|---|---|---|
| | | 1 | 0.5 | 0.25 |
| □ Wc | 0 | -0.26 | -0.25 | -0.18 |
| □ Eta | 0 | 0.07 | -0.11 | -0.46 |
| □ Aex | 0 | 0.72 | 1.29 | 1.73 |
| □ Pin error | 0 | 0.25 | 0.08 | 0.03 |
| □ Tin error | 0 | -0.01 | -0.08 | -0.05 |
| □ W error | 0 | 0.47 | 0.26 | 0.10 |
| □ Pex error | -2.0 | -0.72 | -0.35 | -0.12 |
| □ Tex error | 0 | 0.24 | 0.21 | 0.10 |

This again demonstrates the smearing that occurs when all the normalisations were set to 1; □Pex is the largest parameter with this setting, but its calculated value is significantly smaller than its actual value. The other settings led to results that were even further adrift, so while they may improve the analysis for the deteriorated compressor they do not help to identify the instrumentation error.

For completeness, Table 10 shows the results for the third signature, i.e. the combination of the above two signatures, for the three normalisation settings:

Table 10

| | Signature Value | Calculated Value for different VNorm(i) | | |
|---|---|---|---|---|
| | | 1 | 0.5 | 0.25 |
| □ Wc | -1.8 | -0.75 | -1.30 | -1.77 |
| □ Eta | -1.8 | -0.13 | -0.83 | -1.89 |
| □ Aex | 0 | 0.71 | 1.18 | 1.55 |

(continued)

| | Signature Value | Calculated Value for different VNorm(i) | | |
| --- | --- | --- | --- | --- |
| | | 1 | 0.5 | 0.25 |
| □ Pin error | 0 | 0.88 | 0.46 | 0.18 |
| □ Tin error | 0 | -0.59 | -0.50 | -0.25 |
| □ W error | 0 | -0.02 | -0.03 | -0.01 |
| □ Pex error | -2.0 | -0.87 | -0.44 | -0.17 |
| □ Tex error | 0 | 0.58 | 0.49 | 0.24 |

Again this demonstrates the sensitivity of the analyses to the normalisation values. It is difficult to balance the normalisation values in such a way that an analysis can produce results that are useful in picking up both component and measurement errors.

Summary:- the COMPASS analysis is sensitive to the choice of system variable normalisation values. It is difficult to match the normalisation values to achieve analysis of both engine faults (or engine deterioration) and measurement errors. Further, the results are prone to smearing, i.e. the predicted system variable values are distributed among all components, masking the actual system variable values.

- Comparative Example 3 ("search" method)

The first signature (deteriorated compressor) was processed and the results are shown in Table 11, for each combination of two system variables. Within each combination, the two system variables were allowed to vary independently of each other. The ten combinations producing the lowest values for the error function are shown in Table 11:

Table 11

| Error Function Value | Correlation value | Variable | Value | Variable | Value |
| --- | --- | --- | --- | --- | --- |
| 0.796155243 | 0.998980522 | 1% Eta | 4.067116 | 1% Tin error | -3.728233 |
| 0.879954109 | 0.998874962 | 1% Pin error | 4.09894 | 1% Wc | 2.644556 |
| 0.88421342 | 0.998869419 | 1% Pin error | 1.306429 | 1% Tin error | -0.844839 |
| 0.886209618 | 0.998866856 | 1% Tin error | -1.240094 | 11% Wc | -1.237204 |
| 0.91088827 | 0.99883467 | 1% Pin error | 1.689231 | 1% Eta | -1.191438 |
| 0.932894263 | 0.998806715 | 1% Eta | -2.026787 | 1% Wc | -1.853847 |
| 14.93960945 | 0.979625821 | 1% Pin error | 1.519232 | 1% Tex error | 0.804917 |
| 31.38273289 | 0.956986785 | 1% Wc | -1.523682 | 1% Tex error | 1.286824 |
| 37.27182363 | 0.97969979 | 1% Pin error | 1.866828 | 1% Aex | -0.748658 |
| 64.78889371 | 0.994731009 | 1% Pin error | 1.795276 | 1% Pex error | 0.546618 |

Each row of this table is a solution, with the best (i.e. lowest error function) at the top of the table. In each row the two variables and their values are identified. Also shown in the first column is the final error function value (that is the function being optimised), and a correlation value (calculated using the Excel CORREL function) between the □W, □Pex and □Tex achieved at solution and that of the original signature.

The required solution appears in the sixth row, with values close to those sought. However, a difficulty is such that there are other solutions that provide a good match to the measurements, hiding this actual result. Furthermore, after the sixth solution there is a jump in the error function of an order of magnitude, suggesting that these six may contain the required solution.

If no noise had been introduced to the signature, then the required result would have been an exact match, and would have been at the top of the list with zero error function value and a correlation value of 1.0. So the introduction of this small amount of noise is responsible for relegating the required solution to sixth place.

Better results for combinations of two variables can generally be achieved with greater numbers of measured parameters, as would be the case for normal engine analysis (the present example has only three measured parameters and so only three degrees of freedom).

Turning to the second signature, which is for a single system variable (-2% Pex error, also with introduced noise), this was processed individually adjusted system variables. The results are shown in the Table 12:

Table 12

| Error Function Value | Correlation value | Variable | Value |
|---|---|---|---|
| 1.85 | 0.996581912 | 1% Pex error | -2 |
| 24.38339734 | 0.95644182 | 1% Aex | 1.788445 |
| 188.3955233 | 0.605452359 | 1% Wc | -1.038733 |
| 217.5344635 | 0.426730901 | 1% Pin error | 0.969597 |
| 316.0513459 | 0.056784924 | 1% Eta | 1.200675 |
| 400.0491692 | -0.105390012 | 1% Tin error | 0.121047 |
| 400.64 | -0.426747918 | 1% Tex error | -0.11 |
| 401.21 | 0.569833994 | 1% W error | 0.08 |

The analysis is better, as is generally the case for errors in single system variables.

The third signature is a combination of the first two signatures. This was processed for each combination of three system variables. The results are shown in the Table 13:

Table 13

| Error Function Value | Correl. value | Variable | Value | Variable | Value | Variable | Value |
|---|---|---|---|---|---|---|---|
| 0 | 1 | 1% Pex-error | 3.230849 | 1% W error | -1.7775 | 1% Tex error | 0.804926 |
| 1.20371E-29 | 1 | 1% Pex-error | 3.230833 | 1% W-error | 1.372023 | 1% Tin error | -0.81298 |
| 1.20371E-29 | 1 | 1% Aex | 3.126395 | 1% W-error | 2.133975 | 1% Tex error | 1.789544 |
| 1.20371E-29 | 1 | 1% Aex | 3.12636 | 1% Tin error | -1.80744 | 1% W-error | 1.232503 |
| 1.50463E-29 | 1 | 1% Pex-error | 1.858835 | 1% Pin error | 1.385744 | 1% Tin-error | 0.812972 |
| 2.40741E-29 | 1 | 1% Wc | -3.09017 | 1% Tex error | 1.782261 | 1% W error | 0.960703 |
| 3.91205E-29 | 1 | 1% Tin-error | 3.563881 | 1% Pex-error | 3.230779 | 1% Tex-error | 2.723648 |
| 4.81482E-29 | 1 | 1% Aex | 1.879908 | 1% Tin error | -1.41095 | 1% Pin error | 1.301011 |
| 5.11575E-29 | 1 | 1% Pex-error | 3.594465 | 1% W-error | 1.737695 | 1% Eta | -1.14606 |

Each row is now an exact solution, since with three measurements, any combination of three linearly independent 5 variables will provide an exact solution. Clearly the analysis provides no useful information.

This degeneration does not usually happen in practice, since an engine will typically offer eight to ten measured parameters and there would not be that number of system 10 variables in the analysis. Nonetheless, it illustrates how the "search" method becomes less useful as the number adjusted system variables increases.

Summary:- the "search" method can work with both measurement errors and component shifts. However, the approach may become less useful (i.e. multiple possible solutions) as the number of adjusted system variables increases, and particularly as that number increases towards the number of measured parameter.

- Example 1 (COMPASS + least-absolutes/normalisation)

The first signature (deteriorated compressor) was processed using the COMPASS approach but adapted to include least-absolutes optimisation and modified normalisation to VNorm(i). The results are shown in Table 14:

Table 14

|  | Signature Value | Calculated Value |
|---|---|---|
| □ Wc | -1.8 | -1.91 |
| □ Eta | -1.8 | -1.94 |
| □ Aex | 0 | -0.15 |
| □ Pin error | 0 | 0 |
| □ Tin error | 0 | 0 |
| □ W error | 0 | 0 |
| □ Pex error | 0 | 0 |
| □ Tex error | 0 | 0 |

Compared with the unmodified COMPASS approach (Comparative Example 2), a much better result was achieved. In particular, the smearing shown in Table 8 is absent. Indeed, the final column gives the same solution as the ANSYN approach (Comparative Example 1). This is because COMPASS + least-absolutes/normalisation will generally give an exact solution. However, because the signature included noise, the result did not exactly match the signature value.

The second signature (measurement error) was then analysed, and the results are summarised in Table 15:

Table 15

|  | Signature Value | Calculated Value |
|---|---|---|
| □ Wc | 0 | 0.14 |
| □ Eta | 0 | -0.82 |
| □ Aex | 0 | 2.05 |
| □ Pin error | 0 | 0 |
| □ Tin error | 0 | 0 |
| □ W error | 0 | 0 |
| □ Pex error | -2.0 | 0 |
| □ Tex error | 0 | 0 |

Again the smearing of Table 9 is absent, but the analysis does not provide a good general solution. Indeed, in this case, a better result was actually achieved when the values for VNorm(i) were reverted back to 1% for all the system variables.

Finally, the results for the third signature are displayed in Table 16:

Table 16

|  | Signature Value | Calculated Value |
|---|---|---|
| □ Wc | -1.8 | -2.13 |
| □ Eta | -1.8 | -2.95 |
| □ Aex | 0 | 1.87 |
| □ Pin error | 0 | 0 |
| □ Tin error | 0 | 0 |
| □ W error | 0 | 0 |
| □ Pex error | -2.0 | 0 |
| □ Tex error | 0 | 0 |

Summary:- the number of system variables selected is typically equal to the number of independent measurements. Thus, the method provides a means of "concentrating" relative to the original COMPASS method and avoiding smearing. However, the results cam be sensitive to the value of VNorm(i). For the example, with the signatures examined here, it was impossible to find universal values for VNorm(i) that enabled both component analysis and the identification of instrumentation errors.

- Example 2 ("Search" method + composite variables)

Both the "Search" method (Comparative Example 3) and the COMPASS + least-absolutes/normalisation approach (Example 1) suffer from a similar problem regarding the interference of the variables, particularly when multiple variables are used in the search, or there are several system changes being analysed simultaneously by the absolute error function routines.

A solution is to reduce the number of system variables in the solution process by creating composite variables which represent multiple variables in the original formulation. One such composite variable would be "compressor deterioration" defined as equal parts of □ Wc and □ Eta. This effectively sweeps up two of the existing system variables into one new variable.

The first signature is -1.8% Wc and -1.8% Eta with introduced noise. When the "Search" method was applied with such a composite variable, as well as with single adjustable variables, the results of Table 17 were achieved:

Table 17

| Error Function Value | Correlation value | Variable | Value |
|---|---|---|---|
| 2.702729592 | 0.997867823 | compressor deterioration | -1.862009 |
| 79.72876738 | 0.979627132 | 1% Pin error | 1.519235 |
| 188.6017906 | 0.916458249 | 1% Wc | -1.317959 |
| 216.2894234 | 0.663747191 | 1% W error | -1.7775 |
| 301.6364797 | 0.991156757 | 1% Tin error | 1.369777 |
| 380.7412627 | 0.315876186 | 1% Pex error | -1.230849 |
| 467.449462 | 0.979623377 | 1% Tex error | 0.804926 |
| 475.8454419 | -0.057530105 | 1% Aex | 0.691282 |
| 522.8380112 | 0.956659436 | 1% Eta | -0.397463 |

The analysis clearly identified the "compressor deterioration" parameter, the difference between its error function value and the next in the list being an order of magnitude. The predicted value for the composite variable was -1.86% (that is, -1.86% of both efficiency and capacity) which is close to the original -1.8% of the signature.

Further analyses were then performed with the ratio of □ Wc to □ Eta being varied in the composite variable to determine the robustness of the composite variable. Changing this ratio does not change the error function values obtained when the single variables are adjusted, so "compressor deterioration" will remain the most favoured solution as long as its error function value is less than 79 (the error function value for the next variable in Table 17).

It was found that the ratio □ Eta: □ Wc could vary from 1.8:1 to 1:2.2, while retaining "compressor deterioration" as the most favoured solution. Thus demonstrates the robustness of the approach even with this difficult, poorly instrumented example.

The second signature (-2% Pex error with introduced noise) was correctly identified in the "Search" method approach of Comparative Example 3. As might be expected, including the "compressor deterioration" composite variable in the analysis did not prevent the -2% Pex error also being correctly identified in the "Search" method + composite variables approach.

Turning to the third signature, which combines the first and second signatures, this was analysed using combinations of two system variables, where one of the system variables could be the composite variable. The top results are shown in Table 18:

Table 18

| Error Function Value | Correlation value | Variable | Value | Variable | Value |
|---|---|---|---|---|---|
| 0.303009813 | 0.999999642 | compressor deterioration | -1.95343 | 1% Pex error | -1.808264 |
| 17.09412322 | 0.999083519 | compressor deterioration | -2.332438 | 1% Aex | 1.40304 |
| 53.71341356 | 0.967597485 | 1% Wc | -2.63695 | 1% Tex error | 1.63892 |
| 64.33875514 | 0.992267489 | compressor deterioration | -3.920566 | 1% W error | 1.832688 |
| 64.78748869 | 0.994774222 | 1% Pin error | 3.263226 | 1% W error | 1.453423 |
| 64.78889371 | 0.994774342 | 1% Pin error | 1.795276 | 1% Pex error | -1.453382 |
| 64.79061205 | 0.994773984 | 1% Pex error | -3.230849 | 1% W error | -1.7775 |
| 105.6189919 | 0.934667945 | 1% Pin error | 2.52923 | 1% Tex error | 0.804911 |
| 120.9809633 | 0.97837615 | 1% Aex | 3.167369 | 1% Tin error | -2.3199 |

Again the correct solution has the lowest error function value and therefore is most favoured. This solution can be interpreted as in Table 19:

Table 19

|  | Signature Value | Calculated Value |
| --- | --- | --- |
| □ Wc | -1.8 | -1.95 |
| □ Eta | -1.8 | -1.95 |
| □ Aex | 0 | 0 |
| □ Pin error | 0 | 0 |
| □ Tin error | 0 | 0 |
| □ W error | 0 | 0 |
| □ Pex error | -2.0 | -1.81 |
| □ Tex error | 0 | 0 |

This shows very good agreement with the required values, and differs from the signature values simply due to the noise added to the signature.

Again, an assessment of the robustness of the composite variable showed that □ Eta: □ Wc could vary from 1.2:1 to 1:1.2 and the correct solution would still have the lowest error function value. Even allowing the correct solution to have the second lowest error function value, □ Eta: □ Wc could vary from 1.85:1 to 1:2.0 and the solution having the lowest error function value would still contain the compressor deterioration composite variable.

Summary:- the analyses correctly identified all three signatures, showing a capability to handle both component changes and measurement errors. The approach is relatively robust with respect to the setting up of the composite variable, identifying the correct solution over wide a range of ratios of the components of the composite variable. The composite variable can be readily extended in the real engine case, to other faults, such as general engine deterioration, dirt accumulation etc.

- Example 3 (COMPASS + least-absolutes normalisation + composite variables)

This was performed as Example 1 (COMPASS + least-absolutes normalisation), but with the inclusion of the composite variable "compressor deterioration" defined as equal parts of □ Wc and □ Eta.

For the first signature (-1.8% Wc and -1.8% Eta, the results of Table 20 were obtained:

Table 20

|  | Signature Value | Calculated Value |
| --- | --- | --- |
| □ Wc | -1.8 | -1.69 |
| □ Eta | -1.8 | -1.69 |
| □ Aex | 0 | 0 |
| □ Pin error | 0 | 0 |
| □ Tin error | 0 | -0.15 |
| □ W error | 0 | -0.14 |
| □ Pex error | 0 | 0 |
| □ Tex error | 0 | 0 |

As in Example 1, exactly three variables (the composite variable, □ Tin error and □ W error) were chosen, and again a good match to the required solution was obtained, taking the noise added to the signal into account.

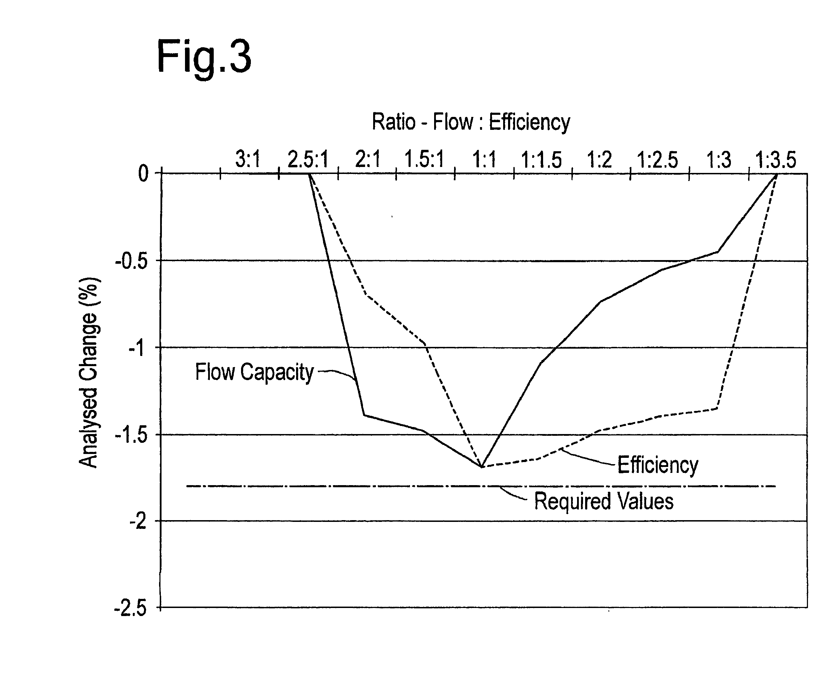

A further investigation of the robustness of the composite variable component ratios was performed. The variable "compressor deterioration" was selected in the solution over a range of ratios of □ Eta:□ Wc of 1:2.5 to 3.5:1. However, the quality of the solution suffered progressively, in a similar manner to the smearing described observed in relation to Comparative Example 2 (COMPASS). Figure 3 shows how the calculated value assigned to the composite variable degraded away from the 1:1 ratio of flow capacity:efficiency. Nonetheless, a subjectively reasonable analysis could be achieved with ratios some way from the one used to develop the signature.

The second signature was then analysed using the same 1:1 ratio composite varaible. The results are shown in Table 21:

Table 21

|  | Signature Value | Calculated Value |
|---|---|---|
| □ Wc | 0 | 0 |
| □ Eta | 0 | 0 |
| □ Aex | 0 | 0.35 |
| □ Pin error | 0 | 0 |
| □ Tin error | 0 | 0 |
| □ W error | 0 | 0.04 |
| □ Pex error | -2.0 | -1.64 |
| □ Tex error | 0 | 0 |

This also produced a reasonable solution, particularly in view of the noise added to the signature.

The third signature combines the first two. The results shown in Table 22 were obtained using 1:1 and 1:2 □ Eta to. □ Wc ratios in the composite variable:

Table 22

|  | Signature Value | Calculated Value (□ Eta:□ W = 1:1) | Calculated Value (□ Eta:□ W = 1:2) |
|---|---|---|---|
| □ Wc | -1.8 | -1.93 | -1.55 |
| □ Eta | -1.8 | -1.93 | -0.77 |
| □ Aex | 0 | 0 | 0 |
| □ Pin error | 0 | 0 | 0 |
| □ Tin error | 0 | 0 | -0.76 |
| □ W error | 0 | 0 | 0 |
| □ Pex error | -2.0 | -1.83 | -1.86 |
| □ Tex error | 0 | 0.06 | 0 |

The 1:1 ratio provided a good result, while the 1:2 ratio, while producing a degraded result, still provided a reasonable assessment of the signature.

Summary:- the approach enabled a reasonable analysis of all three signatures, demonstrating the ability of the approach analyse for component changes and measurement errors simultaneously. The solutions were reasonably robust given the assumptions involved. The approach can be used on a series of data points (such as is typically available from on-wing monitoring of turbines) and so lends itself to engine health monitoring, engine analysis and fault finding.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

**Claims**

1. A method of analysing the performance of a system of an engine, expressed in terms of a plurality of system variables which are associated with expected parameter values for the system, the method including:

obtaining values of a measured parameter for the system in test and/or in service;
analysing the measured parameter values in relation to corresponding expected parameter values by optimising an error function which relates said measured parameter values to the system variables;
wherein the step of optimising the error function includes adjusting the system variables to vary the expected parameter values and thereby vary the amount of error represented by the error function;
**characterised in that** the system variables are grouped such that:

a first portion of the system variables are adjusted independently of each other, and
a further portion of the system variables are adjusted dependently of each other, such that in the further portion the system variables remain in a predetermined constant ratio relative to each other, the predetermined constant ratio being characteristic of a known mechanism changing the performance of the system.

2. A method according to claim 1, wherein the system is a gas turbine engine or part thereof.

3. A method according to claim 1 or 2, wherein:

the error function is a sum of absolute variations and the step of optimising includes a least-absolutes optimisation, the error function including the term:

$$\sum_{i=1}^{n}\left|{Var(i)}\middle/{VNorm(i)}\right|$$

n being the number of system variables, Var(i) being the value of a variation of the $i^{th}$ system variable, VNorm (i) being a normalisation value of the $i^{th}$ system variable; and
the value of each VNorm(i) is in inverse relation to the amount of variation in the expected parameter values produced by adjusting the respective system variable.

4. A method according to claim 3, wherein the error function is of the form:

$$\sum_{i=1}^{n}\left|{Var(i)}\middle/{VNorm(i)}\right| + \sum_{j=1}^{m}\left|{(Mcal(j)-M(j))}\middle/{MNorm(j)}\right|$$

m being the number of measured parameters, M(j) being the measured value of the $j^{th}$ parameter, Mcal(j) being an expected value for the $j^{th}$ parameter, and MNorm(j) being a normalisation value of the $j^{th}$ parameter.

5. A method according to claim 4, wherein Mcal(j) is calculated from a plurality of exchange rates and the variations of the system variables according to the expression:

$$Mcal(j) = \sum_{i=1}^{n} Var(i) \times Xrate(i,j)$$

where Xrate(i,j) is the exchange rate in the $j^{th}$ parameter with respect to variation of the $i^{th}$ system variable.

6. A method according to claim 5, including the step of determining values of each VNorm(i) using the expression:

$$VNorm(i) \propto \left( \sqrt{\sum_{j=1}^{m} (Xrate(i,j))^2} \right)^{-1}$$

or using the expression:

$$VNorm(i) \propto \left( \sqrt{\sum_{j=1}^{m} (Xrate(i,j)/Mnorm(j))^2} \right)^{-1}.$$

7. A method according to any one of the previous claims, further including the step of measuring an output from the system, to obtain the measured parameter values.

8. A method of operating a system including:

performing the analysis method according to any one of the previous claims, and
repairing the system or performing maintenance on the system in response to a result of the analysis method.

9. Computer-readable code for performing the method of any one of claims 1 to 6, when said code is run on a computer system.

10. A computer program product carrying computer-readable code according to claim 9.

11. A computer system configured to perform the method of any one of claims 1 to 6.

**Patentansprüche**

1. Verfahren zum Analysieren der Leistung eines Systems eines Triebwerks, ausgedrückt in Begriffen einer Mehrzahl von Systemvariablen, denen erwartete Parameterwerte für das System zugeordnet sind, wobei das Verfahren umfasst:

   Erhalten von Werten eines gemessenen Parameters für das System im Test und/oder in der Wartung,
   Analysieren der gemessenen Parameterwerte in Relation zu entsprechenden, erwarteten Parameterwerten durch Optimieren einer Fehlerfunktion, welche die gemessenen Parameterwerte mit den Systemvariablen in Beziehung setzt,
   wobei der Schritt des Optimierens der Fehlerfunktion das Einstellen der Systemvariablen zum Variieren der erwarteten Parameterwerte und dadurch zum Variieren der durch die Fehlerfunktion dargestellten Fehlergröße umfasst,
   **dadurch gekennzeichnet, dass** die Systemvariablen so gruppiert sind, dass:

   ein erster Teil der Systemvariablen unabhängig voneinander eingestellt wird,
   und ein weiterer Teil der Systemvariablen abhängig voneinander derart eingestellt wird, dass in dem weiteren Teil die Systemvariablen in einem vorgegebenen konstanten Verhältnis relativ zueinander bleiben, wobei das vorgegebene konstante Verhältnis charakteristisch für einen bekannten Mechanismus ist, der die Leistung des Systems verändert.

2. Verfahren nach Anspruch 1, wobei das System ein Gasturbinentriebwerk oder ein Teil desselben ist.

3. Verfahren nach Anspruch 1 oder 2, wobei die Fehlerfunktion eine Summe von absoluten Variationen ist und der Schritt des Optimierens eine Kleinst-Absoluten-Optimierung umfasst, wobei die Fehlerfunktion den Begriff umfasst

$$\sum_{i=1}^{n}\left|\frac{Var(i)}{VNorm(i)}\right|$$

wobei n die Anzahl von Systemvariablen ist, Var(i) der Wert einer Variation in der i-ten Systemvariablen ist, VNorm(i) ein Normalisierungswert der i-ten Systemvariablen ist, und
der Wert jedes VNorm(i) in inverser Beziehung zu der Größe der Variation in den erwarteten Parameterwerten steht, die durch ein Einstellen der jeweiligen Systemvariablen erzeugt werden.

4. Verfahren nach Anspruch 3, wobei die Fehlerfunktion die Form hat:

$$\sum_{i=1}^{n}\left|\frac{Var(i)}{VNorm(i)}\right| + \sum_{j=1}^{m}\left|\frac{(Mcal(j) - M(j))}{MNorm(j)}\right|$$

wobei m die Anzahl gemessener Parameter ist, M(j) der gemessene Wert des j-ten Parameters ist, Mcal(j) ein erwarteter Wert für den j-ten Parameter ist, und MNorm(j) ein Normalisierungswert des j-ten Parameters ist.

5. Verfahren nach Anspruch 4, wobei Mcal(j) aus einer Mehrzahl von Austauschraten und den Variationen der Systemvariablen gemäß des Ausdrucks berechnet wird:

$$Mcal(j) = \sum_{i=1}^{n} Var(i) \times Xrate(i, j)$$

wobei Xrate(i,j) die Austauschrate in dem j-ten Parameter mit Bezug auf die Variation der i-ten Systemvariablen ist.

6.  Verfahren nach Anspruch 5 mit dem Schritt des Bestimmens von Werten von jedem VNorm(i) unter Verwendung des Ausdrucks umfasst:

$$VNorm(i) \propto \left( \sqrt{\sum_{j=1}^{m} \left( Xrate(i, j) \right)^2} \right)^{-1}$$

oder unter Verwendung des Ausdrucks umfasst:

$$VNorm(i) \propto \left( \sqrt{\sum_{j=1}^{m} \left( Xrate(i, j) / Mnorm(j) \right)^2} \right)^{-1}$$

7.  Verfahren nach einem der vorhergehenden Ansprüche, weiter mit dem Schritt des Messens eines Ausgangs aus dem System, um die gemessenen Parameterwerte zu erhalten.

8.  Verfahren des Betreibens eines Systems mit:

    Durchführen der Analysemethode gemäß einem der vorhergehenden Ansprüche, und
    Reparieren des Systems oder Leistungswartung an dem System in Abhängigkeit von einem Ergebnis der Analysemethode.

9.  Computerlesbarer Code zum Durchführen des Verfahrens nach einem der Ansprüche 1 bis 6, wobei der Code auf einem Computersystem verarbeitet wird.

10. Computerprogramm-Produkt mit einem computerlesbaren Code nach Anspruch 9.

11. Computersystem, das dafür konfiguriert ist, das Verfahren nach einem der Ansprüche 1 bis 6 durchzuführen.

**Revendications**

1.  Procédé d'analyse de la performance d'un système d'un moteur, exprimée en termes d'une pluralité de variables de système qui sont associées à des valeurs de paramètres prévues pour le système, le procédé comprenant :

    l'obtention de valeurs d'un paramètre mesuré pour le système testé et/ou en service ;
    l'analyse des valeurs de paramètres mesurées par rapport aux valeurs de paramètres prévues correspondantes en optimisant une fonction d'erreur qui met en relation lesdites valeurs de paramètres mesurées avec les variables de système ;
    dans lequel l'étape d'optimisation de la fonction d'erreur comprend l'ajustement des variables de système pour faire varier les valeurs de paramètres prévues et faire ainsi varier la quantité d'erreur représentée par la fonction d'erreur ;
    **caractérisé en ce que** les variables de système sont groupées de telle sorte que :

    une première partie des variables de système sont ajustées de façon indépendante les unes des autres, et une autre partie des variables de système sont ajustées de façon dépendante les unes des autres, de telle sorte que dans l'autre partie, les variables de système restent dans un rapport constant prédéterminé les unes par rapport aux autres, le rapport constant prédéterminé étant caractéristique d'un mécanisme connu modifiant la performance du système.

2.  Procédé selon la revendication 1, dans lequel le système est une turbine à gaz ou une partie de celle-ci.

3.  Procédé selon la revendication 1 ou 2, dans lequel :

la fonction d'erreur est une somme de variations absolues et l'étape d'optimisation comprend une optimisation des moindres valeurs absolues, la fonction d'erreur comprenant le terme :

$$\sum_{i=1}^{n} \left| \frac{Var(i)}{VNorm(i)} \right|$$

n étant le nombre de variables du système, Var(i) étant la valeur d'une variation de la $i^{ème}$ variable du système, VNorm(i) étant une valeur de normalisation de la $i^{ème}$ variable du système ; et
la valeur de chaque VNorm(i) est en relation inverse avec la quantité de variation des valeurs de paramètres prévues produites en ajustant la variable de système respective.

4.  Procédé selon la revendication 3, dans lequel la fonction d'erreur se présente sous la forme :

$$\sum_{i=1}^{n} \left| \frac{Var(i)}{VNorm(i)} \right| + \sum_{j=1}^{m} \left| \frac{Mcal(j) - M(j)}{MNorm(j)} \right|$$

m étant le nombre de paramètres mesurés, M(j) étant la valeur mesurée du $j^{ème}$ paramètre, Mcal(j) étant une valeur prévue pour le $j^{ème}$ paramètre et MNorm(j) étant une valeur de normalisation du $j^{ème}$ paramètre.

5.  Procédé selon la revendication 4, dans lequel Mcal(j) est calculé à partir d'une pluralité de taux d'échange et des variations des variables de système selon l'expression :

$$Mcal(j) = \sum_{i=1}^{n} Var(i) \; x \; Xtaux(i, j)$$

où Xtaux (i, j) est le taux d'échange du $j^{ème}$ paramètre par rapport à la variation de la $i^{ème}$ variable du système.

6.  Procédé selon la revendication 5, comprenant l'étape de détermination de valeurs de chaque VNorm(i) au moyen de l'expression :

$$VNorm(i) \; \alpha \left( \sqrt{\sum_{j=1}^{m} (Xtaux(i, j))^2} \right)^{-1}$$

ou au moyen de l'expression :

$$VNorm(i) \; \alpha \left( \sqrt{\sum_{j=1}^{m} (Xtaux(i, j) \, / \, Mnorm(j))^2} \right)^{-1} .$$

7.  Procédé selon l'une quelconque des revendications précédentes, comprenant en outre l'étape de mesure d'une sortie du système, pour obtenir les valeurs de paramètres mesurées.

8.  Procédé de fonctionnement d'un système comprenant :

la réalisation du procédé d'analyse selon l'une quelconque des revendications précédentes, et
la réparation du système ou la réalisation d'une maintenance sur le système en réponse à un résultat du procédé d'analyse.

9. Code lisible par ordinateur pour réaliser le procédé selon l'une quelconque des revendications 1 à 6, lorsque ledit code est exécuté sur un système informatique.

10. Produit de programme informatique contenant un code lisible par ordinateur selon la revendication 9.

11. Système informatique configuré pour exécuter le procédé selon l'une quelconque des revendications 1 à 6.

# Fig.1

# Fig.2a

# Fig.2b

Fig.3

Ratio - Flow : Efficiency

Analysed Change (%)

Efficiency

Required Values

Flow Capacity

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2211965 A

- WO 2006123090 A